Europäisches Patentamt

European Patent Office

Office européen des brevets

(19)

(11) Veröffentlichungsnummer: **0 060 447**
**B1**

(12) # EUROPÄISCHE PATENTSCHRIFT

(45) Veröffentlichungstag der Patentschrift:
10.10.84

(51) Int. Cl.³: **G 01 N 13/04**

(21) Anmeldenummer: **82101666.4**

(22) Anmeldetag: **04.03.82**

(54) **Probenkammer für Membranosmometer.**

(30) Priorität: **16.03.81 DE 3110090**

(43) Veröffentlichungstag der Anmeldung:
**22.09.82 Patentblatt 82/38**

(45) Bekanntmachung des Hinweises auf die Patenterteilung:
**10.10.84 Patentblatt 84/41**

(84) Benannte Vertragsstaaten:
**AT BE CH DE FR GB IT LI LU NL SE**

(56) Entgegenhaltungen:
**DE - A - 2 914 213**
**DE - U - 8 029 989**
**US - A - 3 661 011**

(73) Patentinhaber: **Wallner, Franz, Dr.-Ing.,**
**Humboldstrasse 22, D-1000 Berlin 33 (DE)**

(72) Erfinder: **Wallner, Franz, Dr.-Ing., Humboldstrasse 22,**
**D-1000 Berlin 33 (DE)**

(74) Vertreter: **Sommer, Fritz, Dr. et al, Boehringer Ingelheim**
**International GmbH ZA Patente, D-6507 Ingelheim/Rhein**
**(DE)**

**Beschreibung**

Die Erfindung betrifft eine Probenkammer zur Aufnahme der zu untersuchenden Probenflüssigkeit bei einem Membranosmometer mit zur Atmosphäre hin offener Probenkammer.

Membranosmometer dienen zur direkten Messung des osmotischen Druckes, den eine Lösung auf ihr Lösungsmittel ausübt.

Es ist bekannt, den Hohlraum zur Aufnahme der Probenflüssigkeit (Lösung), der sich innerhalb der Probenkammer befindet, nach oben hin zur Atmosphäre offen zu lassen. Die semipermeable Membran, über welcher sich der osmotische Druck einstellt, bildet dann den Boden eines becherförmigen Napfes, der zum Teil mit Probenflüssigkeit gefüllt wird.

Weiter ist von handelsüblichen Membranosmometern her bekannt, zum Einbringen der Probenflüssigkeit und/oder des Lösungsmittels (zum Spülen) und zum Absaugen dieser Flüssigkeiten eine Metallkanüle innerhalb des genannten Hohlraumes anzuordnen, die dicht oberhalb der Membran mündet und mit ihrem anderen Ende aus der Probenkammer herausragt. Diese Kanüle kann aus der Probenkammer herausnehmbar angeordnet oder an ihr fixiert sein.

Diese Vorrichtung besitzt folgende Nachteile:

— sie vergrößert die innere Oberfläche der Probenkammer und erschwert deren Reinigung von der Probenflüssigkeit, was besonders bei infektiösen Proben in der Medizin von Bedeutung ist,
— sie kompliziert den Aufbau der Probenkammer,
— sie erfordert mit der Probenkammer steif verbundene Halterungen, welche die Kräfte beim Ansetzen von Injektionsspritzen und dergleichen aufnehmen.

Der Erfindung liegt die Aufgabe zugrunde, das Einbringen und Entfernen von Probenflüssigkeit und/oder Lösungsmittel zu ermöglichen

— bei geringster Oberfläche der von der Probenflüssigkeit benetzten Teile,
— mit guter Reinigungsmöglichkeit,
— mit geringem Herstellungsaufwand und
— unter Vermeidung besonderer Haltevorrichtungen für Injektionsspritzen oder andere anzuschließende Teile.

Diese Aufgabe wird durch die im Kennzeichen des Patentanspruchs 1 angegebenen Merkmale gelöst.

In einer Ausgestaltung der Erfindung ist die Bohrung 7 an ihrem vom Probenraum abgewandten äußeren Ende zu einer kegeligen Bohrung 8 aufgeweitet, die entsprechend den in der Medizin üblichen Kegelverbindungen gestaltet ist, und damit zum direkten dichten Anschluß von Injektionsspritzen oder Schlauchverbindungen dienen kann.

In einer weiteren Ausgestaltung der Erfindung sind die Bohrung 7 und die Kegelbohrung 8 nicht koaxial angeordnet; dadurch kann unter Umständen die Fertigung vereinfacht und/oder die Lage der außen an die kegeligen Bohrungen angeschlossenen Teile günstiger gestaltet werden.

Die beschriebene erfindungsgemäße Einbringung von Bohrungen direkt in die Wandung der Probenkammer hat folgende Vorteile:

a) Die Fertigung ist besonders einfach.
b) Es sind keine zusätzlichen Teile erforderlich.
c) Die Kanäle reinigen sich selbst, wenn sie zum Einspritzen und Absaugen von Lösungsmitteln verwendet werden.
d) Die konstruktiv ohnehin steife Probenkammer nimmt die Kräfte beim Einstecken von Injektionsspritzen oder ähnliches ohne weitere Vorkehrungen auf.
e) Die Mündung der genannten Bohrung direkt über der Membran erlaubt ein besonders gründliches Absaugen des Lösungsmittels.

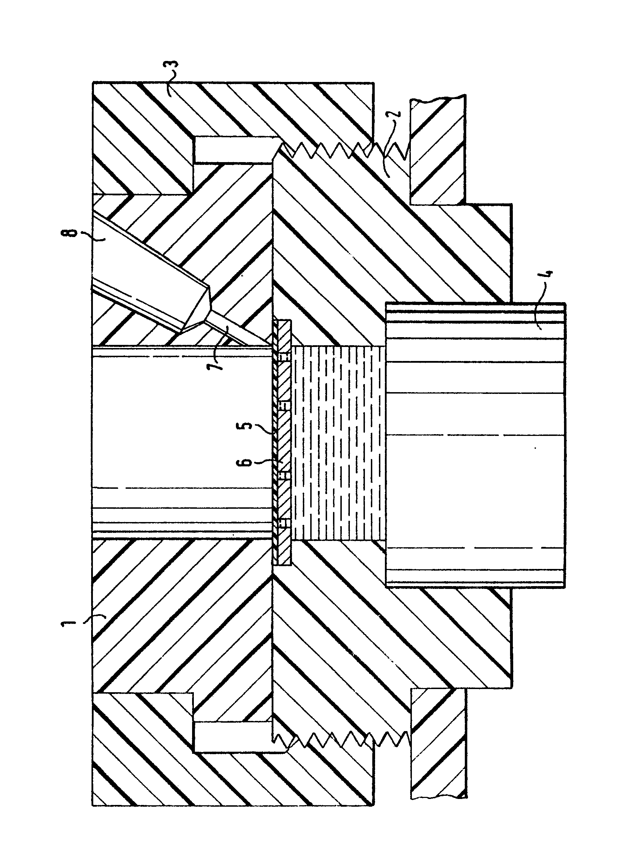

Ein Ausführungsbeispiel ist in der Zeichnung dargestellt. Die Probenkammer 1 wird von einem Schraubring 3 mit der Druckmeßkammer 2 verbunden, in der sich der Druckaufnehmer 4 befindet. Die semipermeable Membran 5 — unterstützt durch die Stützplatte 6 — trennt den Hohlraum in der Probenkammer von demjenigen in der Druckmeßkammer. Dieser ist mit dem Lösungsmittel gefüllt, während in jenen die Probenflüssigkeit eingebracht wird. Die Bohrung 7 mündet unmittelbar oberhalb der Membran 5 und ist an ihrem äußeren Ende zu der kegeligen Bohrung 8 aufgeweitet, an die durch bloßes Einstecken zum Beispiel Schlauchverbinder oder Injektionsspritzen mit entsprechenden kegeligen Ansätzen dicht angeschlossen werden können.

Wenn — wie in der Zeichnung nicht dargestellt — die Probenkammer 1 erfindungsgemäß mit mehreren Bohrungen 7 versehen wird, kann zum Beispiel durch eine dieser Bohrungen Lösungsmittel eingespritzt werden und durch eine zweite, vorzugsweise der ersten diametral gegenüberliegende Bohrung wieder abgesaugt werden. Dadurch wird eine besonders wirkungsvolle Form der Spülung des Probenraums und besonders der Membran und ihrer Anschlußstellen zur Wandung der Probenkammer erreicht.

**Patentansprüche**

1. Probenkammer zur Aufnahme der zu untersuchenden Probenflüssigkeit bei einem Membranosmometer mit zur Atmosphäre hin offener Probenkammer (1), dadurch gekennzeichnet, daß in der Wandung der Kammer (1) eine oder mehrere Bohrungen oder Kanäle (7) vorgesehen sind, welche von außen ins Innere der Probenkammer (1) führen und in der Nähe des äußeren Randes des freien Teils der semipermeablen Membran (6) münden.

2. Probenkammer nach Anspruch 1, dadurch gekennzeichnet, daß die äußere Mündung bzw. die äußeren Mündungen der Bohrungen (7) kegelig aufgeweitet (8) sind zur Aufnahme z. B. der üblichen kegeligen Ansätze medizinischer Injektionsspritzen und Fittings.

3. Probenkammer nach Anspruch 1 und 2, dadurch gekennzeichnet, daß die Achsen der kegeligen Aufweitung (8) und der Bohrung (7) einander unter einem von Null verschiedenen Winkel schneiden.

4. Probenkammer nach Anspruch 1 und 2, dadurch gekennzeichnet, daß die Achsen der kegeligen Aufweitung (8) und der Bohrung (7) einander nicht schneiden.

## Claims

1. A sample chamber for receiving the sample liquid to be investigated in a membrane osmometer having a sample chamber (1) open to the atmosphere, characterised in that one or more bores or channels (7) are provided in the walls of the chamber (1), leading from outside into the interior of the sample chamber (1) and opening out in the vicinity of the outer edge of the free portion of the semipermeable membrane (6).

2. A sample chamber as claimed in claim 1, characterised in that the outer opening or outer openings of the bores (7) flare out conically in order to receive, for example, the usual conical attachments of medical injection syringes and fittings.

3. A sample chamber as claimed in claims 1 and 2, characterised in that the axes of the conical expansion (8) and of the bore (7) intersect at an angle greater than zero.

4. A sample chamber as claimed in claims 1 and 2, characterised in that the axes of the conical expansion (8) and bore (7) do not intersect.

## Revendications

1. Chambre à échantillon pour la réception du liquide échantillon à étudier dans le cas d'un osmomètre à membrane avec chambre à échantillon (1) ouverte sur l'atmosphère, caractérisée en ce que dans la paroi de la chambre (1), un ou plusieurs percements ou canaux (7) sont prévus, qui conduisent de l'extérieur dans l'intérieur de la chambre à échantillon (1) et débouchent au voisinage du bord externe de la partie libre de la membrane semiperméable (6).

2. Chambre à échantillon suivant la revendication 1, caractérisée en ce que l'embouchure externe ou les embouchures externes des percements (7) sont élargies en forme de cône (8) pour la réception par exemple des rallonges côniques habituelles de seringues d'injection et de raccords médicaux.

3. Chambre à échantillon suivant la revendication 1 et 2, caractérisée en ce que les axes de l'élargissement cônique (8) et du percement (7) se coupent sous un angle différent de zéro.

4. Chambre à échantillon suivant la revendication 1 et 2, caractérisée en ce que les axes de l'élargissement cônique (8) et du percement (7) ne se coupent pas.